# EUROPEAN PATENT SPECIFICATION

(11) **EP 2 617 654 B1**
(45) Date of publication and mention of the grant of the patent: **15.11.2017**
(21) Application number: 12000408.0
(22) Date of filing: 23.01.2012
(51) Int. Cl.: B65D 1/02, B65D 81/30

(54) **Opaque single-layer container and method for producing said container**
Opaker, einschichtiger Behälter und Verfahren zu seiner Herstellung
Récipient monocouche opaque et procédé de fabrication d'un tel récipient

(43) Date of publication of application: 24.07.2013
(73) Proprietor: Sociedad Anónima Minera Catalano-Aragonesa, 50001 Zaragoza (ES)
(72) Inventor: Leza Roa, Fortún, 50001 Zaragoza (ES); Caballero López, Miguel Àngel, 50001 Zaragoza (ES)
(74) Representative: Schäfer, Matthias W.

(56) References cited:
- EP-A1- 1 970 181
- WO-A1-2008/027753
- FR-A- 1 591 905
- FR-A1- 2 869 019
- JP-A- 4 114 057

## Description

### Field of the invention

In the area of solutions for protecting photosensitive substances from light radiation, the present invention relates to a method for producing an opaque single-layer container, formed from thermoplastic material, the thermoplastic matrix of which is polyethylene terephthalate (PET), polyethylene (PE), polypropylene (PP), polylactic acid (PLA), polyethylene naphthalate (PEN), polyamide (PA), or a mix of some of these and at least one shielding filler that includes aluminum metal Al.

The differentiating features of the invention are the result of effectively combining a very high light-shielding capacity, of up to 99.99%, with the constancy of the shielding level through the whole light spectrum, up to 700 nm, so that practically total protection can be achieved at any wavelength with filler levels that are much lower than those conventionally used to date.

### Current state of the art

There are many substances that are sensitive to deterioration by the action of light, with the resulting alteration of organoleptic and nutritional properties. Amongst these substances vitamins, amino acids, peroxides or fats can be mentioned, each one of them being especially sensitive to one or several wavelengths, specific to each substance and different one from another, so that we can find photosensitive substances at practically any wavelength of both the ultraviolet spectra (UVA) (up to 400 nm), and the visible spectra (VIS) (400 to 700 nm), in which there are specific sensitivities. For example:
- Vitamin B2 (riboflavin): specific sensitivity reaches wavelengths of up to 550 nm. This region of the visible spectrum (VIS) is particularly critical due to the extreme sensitivity of vitamin B2 around 550 nm, its degradation, in the case of milk, causing severe alterations to nutritional capacity, odour and taste (the organoleptic alteration caused in milk by the effect of degradation of riboflavin is known as "lightstruck flavour").
- Vitamin A (retinol): 410 - 460 nm.
- Vitamin C (ascorbic acid): the most aggressive wavelengths are below 300 nm.
- Amino acids: particularly sensitive in the UVA region (around 250 nm), less sensitive to VIS radiation.
- Chromophore compounds of different types: sensitivities can be found in both the UVA region and the VIS region.

The incorporation of light shields in containers intended for containing substances that are sensitive to deterioration induced by the action of UVA or VIS light is common practice in the industries of packaging and distribution of dairy products, fruit juices, pharmacy, drugs and, in general, food or preparations that contain substances that are susceptible to photolytic degradation.

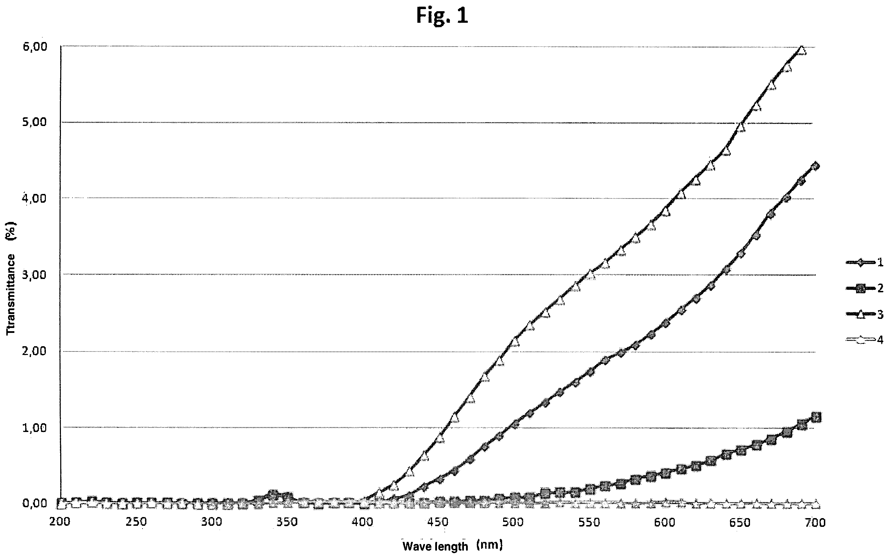

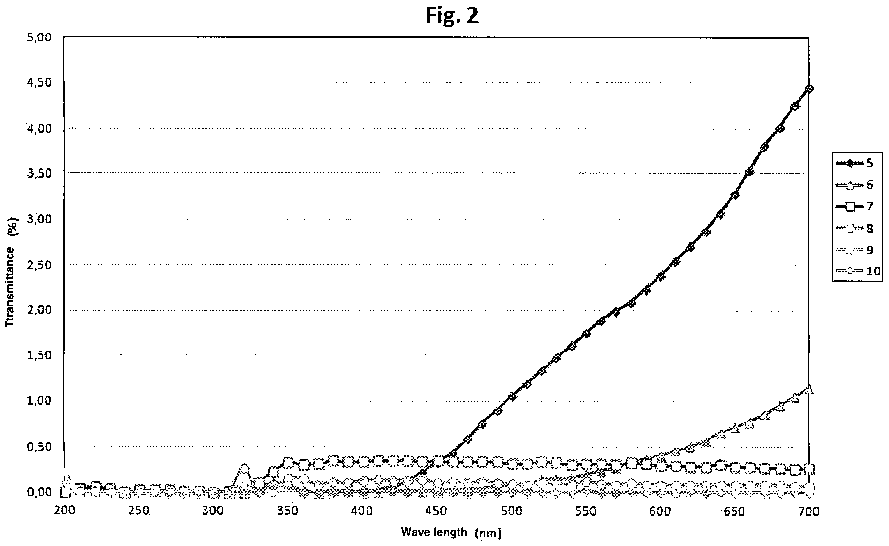

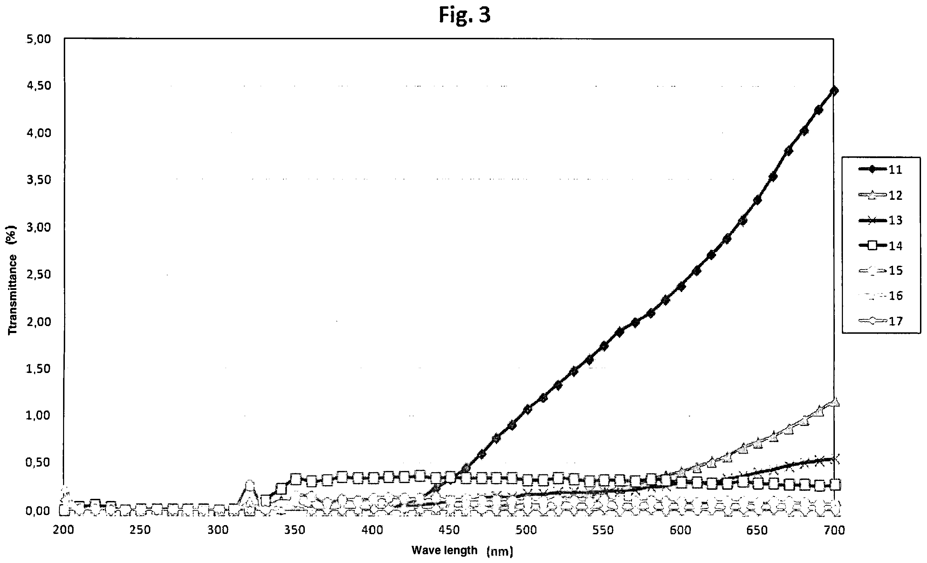

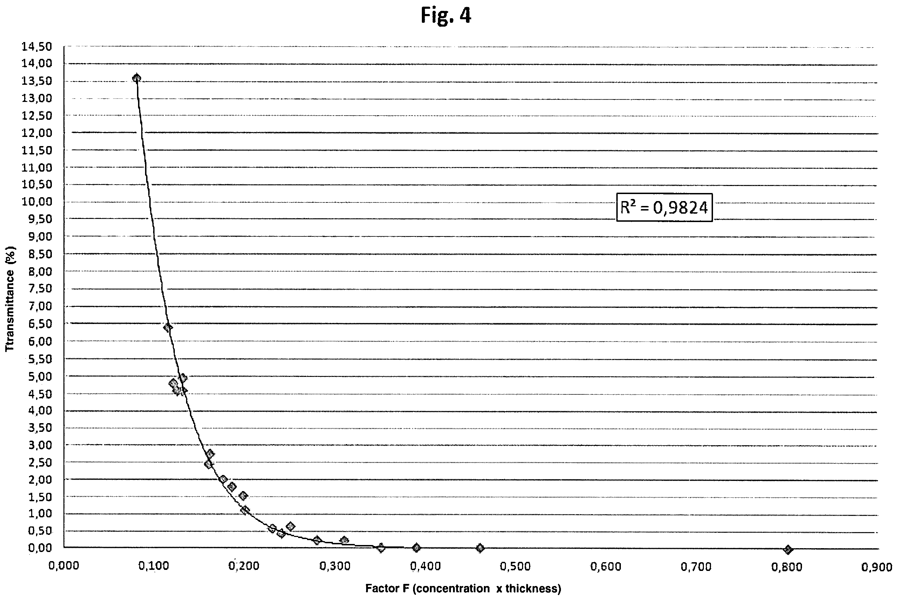

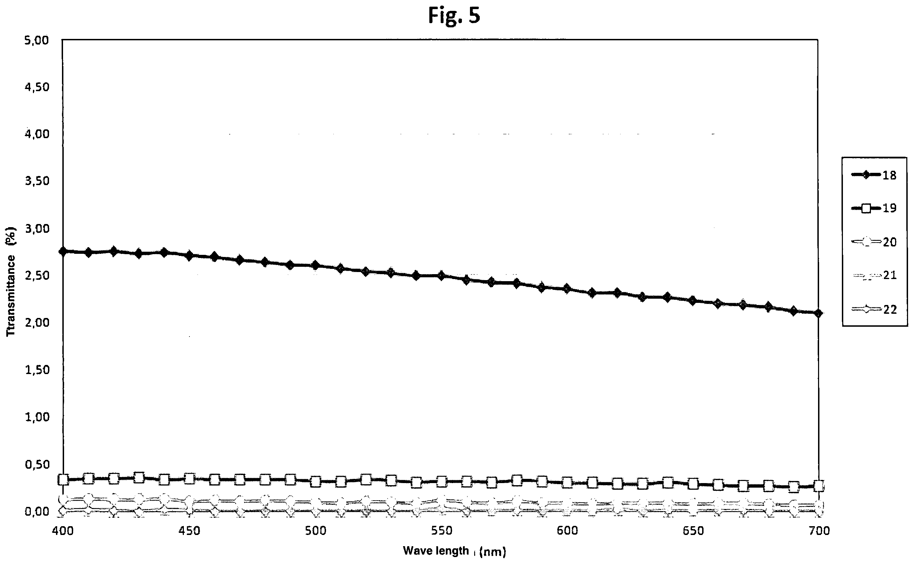

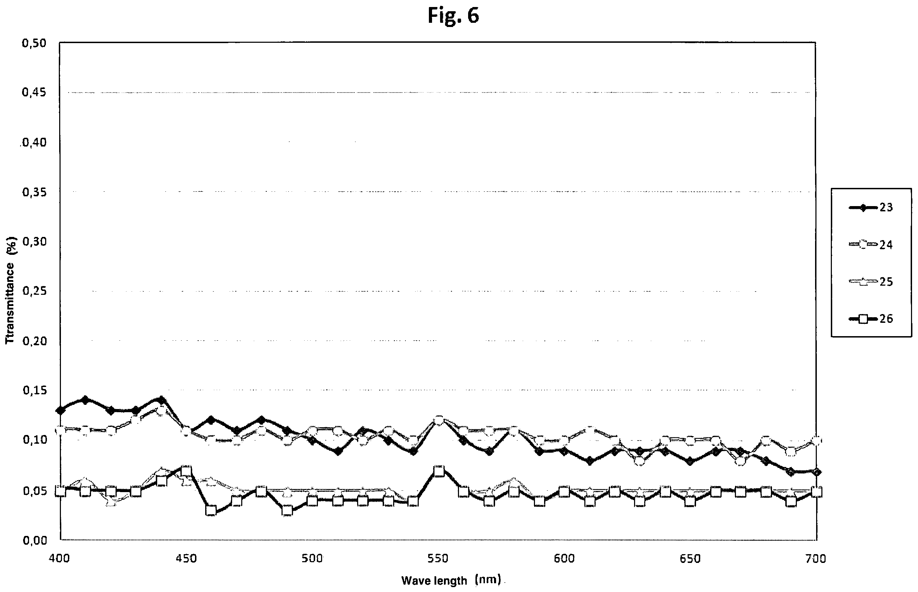

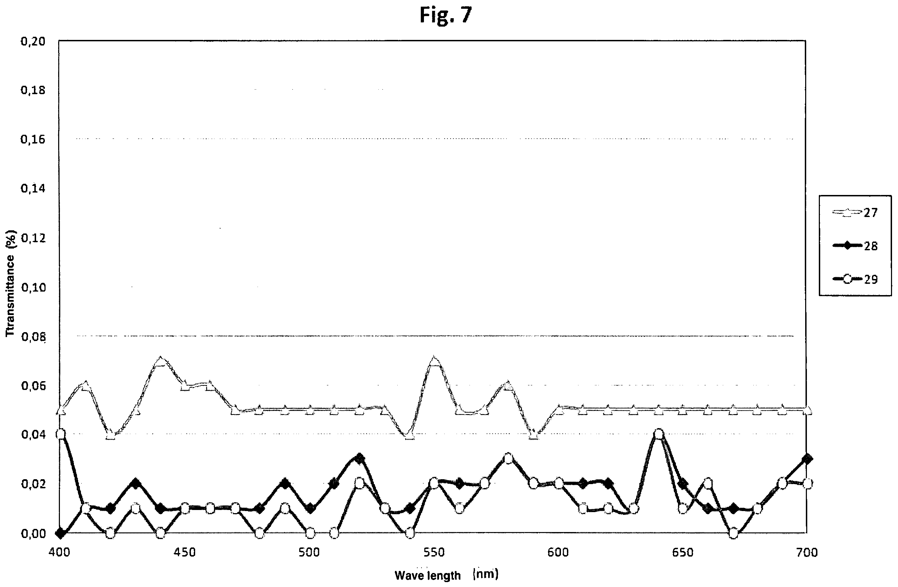

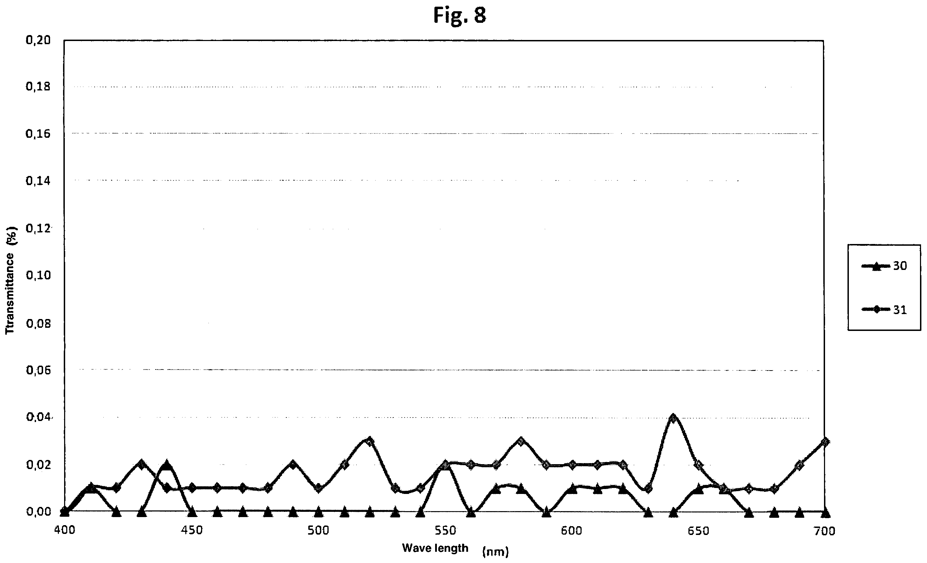

Two spectral regions of radiations that are potentially aggressive for photosensitive substances have to be differentiated:
- The UVA non-visible region of the spectrum which covers from 200 nm to above 300 nm (but below 400 nm). This is a very energetic region but one that is relatively easy to protect as there are many commercial solutions that enable effective, almost total shielding. Obtaining reliable shielding measurements (always expressed as % TR) in the UVA region is not easy and in our case such measurements are outsourced to be performed by an authorized centre; for this reason, having studied the shielding effectiveness in said spectral region provided by the available commercial solutions and the solution disclosed in this description, most of the experimental measurements have been made in the visible light spectrum (from 400 nm to 700 nm).
- The visible spectrum (VIS): ranges from approximately 400 nm to 700 nm wavelength. As previously explained, in this region there are specific sensitivities, amongst which it is important to highlight that of riboflavin at 550 nm. It is in the VIS where currently available single-layer solutions, conventionally white and based on greater or lesser contents of TiO2 combined or not with other types of fillers, present shielding difficulties that are all the more marked the higher the wavelength. As can be seen in fig. 1, it is in the VIS region where the container produced by the method of the invention that is presented provides substantial advantages over those commercially available at the present time.

From amongst the multiple options that exist for producing containers, both in terms of the materials used and the technologies for their manufacture and the addition of shields, hereafter we will refer to containers consisting of thermoplastic matrixes and, in particular, to some thermoplastic matrixes that afford the following benefits compared to other options such as glass, metal or complex combinations of different materials:
Processability: the current state of the art offers various manufacturing alternatives based on commonly-used, easy to handle, perfectly-known thermoplastics.
   - Possibility of personalization: there are practically no technical and economic barriers to the choice of the geometry, shape and size of the container.
   - Lightness: the weight of the plastic containers is usually and feasibly much less than that of other alternatives such as glass or metal.
   - Cost-savings: the commoditization that many plastic materials have undergone due to their extensive use, means that they are highly competitive compared to most of the alternative materials. Indeed, an increasing number of materials are being replaced by plastics for the manufacture of containers.
   - Sustainability: the possibility of recovering and recycling most thermoplastics is widely known, there are well-established channels for collection and usual and affordable technologies for sorting and reinserting them in the consumption circuit with every guarantee.

There are different ways of adding a light shield to plastic containers, each with its own particular characteristics, benefits and drawbacks; the following are the most widely used:

Containers with incorporated shield: in these the plastic matrix is filled with materials that inhibit the passage of light, amongst which can be cited titanium dioxide TiO₂, silicon dioxide SiO₂ or zinc sulfide ZnS, amongst others, with or without other secondary fillers that help to complete the shield.

The filler content in this type of opaque containers with light protection is usually between 5% and 25% weight of filler in relation to total weight of container.
- *Multilayer:* allows the total mineral filler content to be reduced due to the combination of different additives in each layer, so that, usually, the inner layer is black and provides the greatest shielding capacity and the outer layer (in the case of two layers) or the outer layers (in the case of three layers), are filled with other materials that conceal the black colour that has a non-conventional aspect and is impossible to personalize by overlaying it with colours or labels.
   Filler contents in this type of containers are usually around 5% by weight.
   This technology affords shields which can be considered to be total shields at any wavelength but which present drawbacks due to the complexity of the equipment and processes involved: specific equipment is required, the investment is considerable, maintenance is costly and levels of rejection due to non-quality are much greater than in single-layer technologies.
- *Single-layer:* feasible due to the use of equipment and processes that are much cheaper, more affordable and more flexible than the previous ones, but sufficient shielding levels to protect sensitive products can only be achieved at the expense of a significant increase in the amounts of fillers incorporated, said amounts normally being between 7% and 25% by weight of the fillers in relation to the weight of the container.
   Another feature of conventionally-obtained shields in this type of containers is that the greater the wavelength, the poorer the shielding level is. However, there are perfectly viable solutions for highly sensitive products such as UHT milk and UHT milk products.

Processing procedures, both those relating to the production of containers and those involved in adding shielding fillers to the polymeric matrix, are diverse and depend on both the type of container itself and the plastic materials that form the principal matrix. The most frequent processes are indicated below.

### Incorporation of shielding fillers to the polymeric matrix.

It is very important for fillers to be totally dispersed and evenly distributed in the polymeric matrix. To achieve this, one of the following procedures can be performed:
- *Polymerization phase:* this involves dispersing the fillers in one of the monomers or in the polymer precursor raw materials, before they enter the polymerization reactors. This is the most reliable way to ensure excellent dispersion and homogeneous distribution of fillers, but it is not always possible to perform due to the complex nature of polymerization facilities and the fact that some fillers may produce interferences in reactive processes.
- *Mixing in auxiliary extruders:* this involves diverting a flow of melt-phase polymers at the very output of the reactors, before the usual pelletizing process, so that, by means of appropriate metering, fillers can be incorporated in the melted polymeric flow to be homogeneized and dispersed by specific screw systems that are normally multi-screw systems. Once the fillers and melt-phase polymer have been homogeneized, the resulting compound is extruded for cooling and final pelletizing. These systems are expensive and complicated to install and to operate, but afford pellets ready for final use, without any further operations being necessary.
- *Use of concentrates or master batches:* they can be either in liquid or solid form so that the filler is highly concentrated in a carrier that is compatible with the polymer matrix that will be the base of the desired container. After preparing the master batch it is metered, in the appropriate proportion to the concentration of final fillers required in the container, in the plasticizing screws of the injection, injection-blowing, extrusion-blowing or compression machines that form the precursor structures of the final containers (preforms, piece finished by injection, extruding prior to blowing....).

There are metering systems that allow a high precision of doses and normally the plasticizing systems are capable of homogenizing the mix of polymer and master batch adequately if the concentrations of fillers are low, but they have drawbacks when high amounts of fillers are required (the greater the proportion of fillers, the greater the drawbacks are), due to possible deviations in metering and the difficulties in adequately dispersing and homogenizing the fillers in the plasticizing screws on the production lines, as the screws of these machines are not specifically designed for this purpose.

### Production of containers.

There are different procedures for production of containers, which have in common the fact that of a hollow body is obtained, open at one of its ends, said opening constituting the mouth of the container, and that, prior to the formation of the desired piece by moulding, there is a process usually called plasticizing, which consists of melting the plastic material and homogenizing the melted mass, or this mass with the additives or fillers, if relevant. The procedures to obtain containers, as already mentioned, are diverse and depend on the geometry, shape and size of the containers and the nature of the plastic matrixes used. The most widespread procedures are:

### Direct injection.

The plastic material, once the corresponding fillers have been added, is plasticized and homogenized, in a plasticizing chamber equipped with one or more rotating screws, at a temperature slightly higher than the melt temperature of the plastic material.

Once the plasticizing process has been completed, the melted material is inserted in a mould with one or more cavities, by means of the pressure transmitted by an injection piston.

The mould cavities are at a temperature that is considerably lower than the melt temperature of the plastic and they are designed so that once the pieces have cooled and solidified inside the cavities they can be removed so that the cycle can be repeated again.

This type of process can be applied to thermoplastics such as PET, PA and PP, amongst others.

### Injection - blowing in one single stage.

The process begins in a very similar way to the previous one, with the particular feature that once the container precursor pieces or preforms have been injected they are removed from the mould partially solidified so that they have sufficient consistency to maintain a stable shape, but their temperature is above glass transition temperature (Tg), which is the temperature above which plastic material is malleable in solid state by mechanical action.

This preform, still hot, is inserted in a second blow-moulding unit. A second mould, this time a blowing mould, encloses the preform through whose mouth high pressure air is introduced. This pressure causes the preform to swell up as the material is stretched, until it reaches the size and shape of the blowing mould. The material cools on the walls of the blowing mould, finally forming the container. Once the container is cold and stabilized by this effect, it is removed from the mould and the cycle can be repeated.

This process is known as bioriented-injection-blowing

### Blowing of preforms.

The process begins with a cold, dimensionally stable piece, which is formed by injection as previously described, and is known as the preform. In this case the preform must be heated until it reaches its moulding temperature (Tg), which is achieved by placing the preform in a IR radiation furnace.

Once the preform has been heated to above the Tg of the material it is blown in the blowing mould in the same way as in the previous case.

This process is characteristic of PET, and it is also applicable to other thermoplastics such as PLA or PP.

### Compression-moulding of preforms.

The process starts with the plasticizing of the material, as in the previously described cases.

After plasticizing, the melted material is extruded and portions, of a uniform weight, are cut from the extruded material and placed in hollow moulds of the shape required for the preform. While the material is still hot and inside the mould, a ram presses the material, which adopts the shape of the mould due to the pressure exerted by the ram. Once it is cold, the preform is removed from the mould and the cycle can be repeated again.

The preforms obtained in this way can be blown in the same way and using the same equipment as that described for the blowing of preforms.

It is not a very usual process but there are systems of this type used to produce PET preforms; probably they can also be used for other materials such as PLA or PP.

### Extrusion - blowing

Once again the process begins at the material plasticizing stage. By extrusion the plasticized material flows through an opening or nozzle situated at the end of the plasticizing chamber. This nozzle is designed in such a way that it forms a hollow tube in the material, which flows continuously, hanging down from the nozzle on a vertical axis by the action of gravity.

At regular intervals a blowing mould equipped with appropriate travelling systems, closes around the tube of extruded material, cutting it in a portion that is equivalent to the axial length of the blowing mould. The mould, with the portion of extruded material still hot inside it, travels to a blowing unit in which high-pressure air is introduced through the mouth of the mould. This pressure inflates the extruded tube in a perpendicular direction to its longitudinal axis throwing the material against the walls of the mould, where it cools and obtains its final size and shape.

While one mould is completing the blowing process the other initiates the capture of the portion of extruded tube, completing a continuous process of formation of containers by extrusion - blowing.

This process is characteristic of polyolefins (PP, PE), of PVC and PC, amongst other polymers.

### Background to the invention

There are already known patents relating to the production of containers intended to protect their contents from light radiations. Some of these are indicated below.

Patent EP 1541623 *"Photoprotective composition for food containers"* uses a mixture of white pigment, aluminium power, black pigment and pearlescent pigment to make the plastic opaque but it has the drawback, compared with the present invention, in that it requires a complex formula and the incorporation of other fillers than Al in proportions that are much higher than this one, which means, in high shields, a presumably higher concentration of filler and a higher economic cost than with the proposed solution.

Patent ES 2285420 *"Article comprising light absorbent composition to mask visual haze and related methods"* presents a solution that is not based on the use of aluminium, nor does it relate in any way the percentage of opacifying agent to the thickness of the wall.

Patent WO 03064267 *"Opaque polyester containers"* contemplates the use of aluminium inside the opacifying agent, but without establishing any ratio between the percentage of opacifying agent and the wall thickness, so that it is not possible to optimize the amount of opacifying agent used in the mix. Furthermore, it necessarily associates the light shield with the reduction in gas permeability so that the intended objective and, consequently, the final composition of the materials in the container are not related to the invention presented here.

Patent EP 7005185 *"Preform for blow-moulding a container"* combines titanium dioxide with a light protection pigment in two layers with different percentage, this solution not being applicable to single-layer containers.

Further, WO 2008/027753 A1 discloses a method according to the preamble of claim 1. A composition comprising a colored recycled polyethylene terephthalate (RPET) and an opacifying material is disclosed. The composition can further comprise a virgin polyethylene terephthalate (PET), a high gas barrier or an oxygen scavenging compound. Suitable opacifying materials are inter alia metal powders such as aluminium. The polyester resin can contain from 0,1 to about 5 weight % of opacifying material. Other embodiments of the invention described in WO 2008/027753 A1 include opaque single layer containers produced from these compositions and processes for producing these compositions.

JP H04114057 A discloses a polyester-based composition which is obtained by blending (A) 100 pts. wt. polyester, preferably polyethylene terephthalate, having 0.5-1.5, preferably 0.55-0.85 intrinsic viscosity with (B) 2.5-6 pts. wt., preferably 4-5.3 pts. wt. light reflecting pigment, preferably rutile type titanium white, (C) 0.005-0.015 pt. wt., preferably 0.009-0.012 pt. wt. light absorbing pigment, preferably carbon black, and preferably further (D) 0.05-0.1 pt. wt., preferably 0.07-0.09 pt. wt. iron oxide and, as necessary, lubricants, stabilizers, antioxidants, thermal deterioration inhibitors, ultraviolet light deterioration inhibitors, etc.; The aforementioned composition is useful for blow molded bottles having excellent light shielding properties.

### Description of the invention

To help resolve the problems associated with manufacturing opaque containers with a high capacity for light protection, thus improving the current state of the art and simplifying their production, a method for producing an opaque single-layer container has been devised which is the object of the present invention, the container being formed by thermoplastic material and at least one shielding filler which comprises metal aluminium Al and which can be combined optionally with C(carbon) black, iron oxide or other products.

The differentiating features of the invention are the result of effectively combining a very high light shielding capacity (up to 99.99%= with the constancy of the shielding level at any wavelength between 200 nm and 700 nm (UV and VIS), so that it is possible to attain practically total protection at any wavelength with filler levels that are much lower than those conventionally used to date.

As an endorsement of the effectiveness of the invention, Table 1 shows several examples based on single-layer plastic containers made using commercial solutions intended specifically to provide light shielding. In these, the effects of different modes of incorporating the fillers and different contents of total fillers in commercial containers is compared with the same parameters in prototype containers based on the method of the invention that is presented in this description.

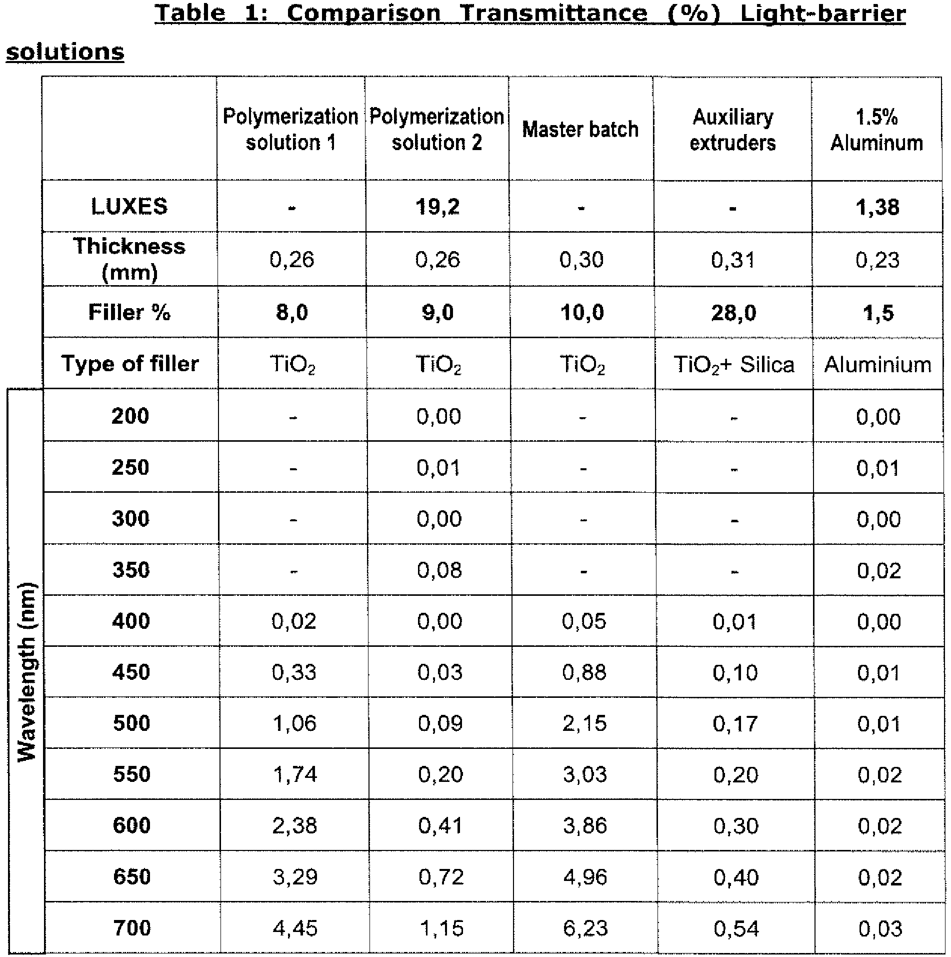

### Advantages of the invention

The present invention provides a method for producing an opaque single layer container according to claim 1. The opaque, single-layer container that is produced by the method presented affords numerous advantages over those currently available, the most important of these being the possibility of achieving practically total protection at any wavelength with filler levels that are much lower than those conventionally used to date, as a result of effectively combining, in the mix of the shielding filler with the plastic matrix, a very high capacity to reflect radiations in the whole of the light spectrum

An important advantage provided is the simplicity of the mix presented, due to the low amount of filler (Al) needed to complete protection, affording greater simplicity in incorporating the shield in the containers and a lower cost of industrial solutions.

Another noteworthy advantage provided by this invention is that it is possible to know in advance and in a precise manner, the composition of a suitable container to meet a previously established shielding requirement, based on a factor F, defined as the product of the thickness of the wall of a container in mm (Ep) multiplied by the concentration of aluminum Al contained in the thermoplastic matrix (%A) F = Ep x %A.

Another advantage of the invention is that, on an equal coverage basis, the containers are considerably lighter than the conventional solutions available to date, due to the low amount of filler needed, since the fillers are systematically denser than the conventional plastic matrixes and the weights of the known opaque, light-protecting containers, are always heavier than their filler-less counterparts. Table 2 illustrates this fact and, as can be seen, considering coverages that are similar to other solutions, in a 1-litre container there will be a weight difference of more than one gram in favour of the proposed solution, using the same manufacturing moulds and tools.

**Table 2: Weight of containers**

| **Material** | **Weight (g)** | **Filler (%)** | **Type of filler** | **% TR at 550 nm** |
|---|---|---|---|---|
| Standard PET Container | 26.7 | 0 | - | 89.18 |
| Commercial Container 1 | 27.6 | 8 | TiO₂ (Main filler) | 3.66 |
| Commercial Container 2 | 28.1 | 9 | TiO₂ (Main filler) | 0.54 |
| Aluminum Containers | 26.8 | 1,2 | Aluminum (Single filler) | 0.12 |

Another important advantage is the accessibility and availability of the shielding filler as these are very commonly used products in numerous industrial sectors.

Lastly, the advantages provided in terms of sustainability are evident, due to: lower weights, less quantity of fillers and less wastage and wear in production equipment.

### Description of figures.

For a better understanding of the object and the experimental development of the present invention, the following figures are attached.

Figure -1- shows a graph that represents the difference, in relation to constancy at different wavelengths, between the currently available commercial solutions and that proposed in the description of this invention. In this case the complete spectrum (UVA and VIS) has been measured. The stability of the given shield with Al can be observed, compared to the progressive weakening of the shield in the conventional commercial options, as the wavelength increases in the visible spectrum. All of the solutions appear to be notably effective in the UVA (ultraviolet region).

The references used in the graph correspond to:
(1) - Commercial 1: 8% Filler (Titanium dioxide + Iron oxide), Eₚ = 0.26 mm
(2) - Commercial 2: 9% Filler (Titanium dioxide + Iron oxide), Eₚ = 0.26 mm
(3) - Commercial 3: 10% Filler (Titanium dioxide), Eₚ = 0.32 mm
(4) - Solution claimed: 1.5% Aluminum, Eₚ = 0,23 mm

Figure -2- shows a graph representing the shielding levels of both the conventional commercial solutions and of the proposed invention in the UV region. As can be seen, all of them are manifestly effective in this region of the spectrum, unlike what occurs in the VIS.

The references used in the graph correspond to:
(5) - Commercial 1: 8% Filler (Titanium dioxide + Iron oxide), Eₚ = 0.26 mm
(6) - Commercial 2: 9% Filler (Titanium dioxide + Iron oxide), Eₚ = 0.26 mm
(7) - Standard PET + 1.0% Aluminum, Eₚ = 0.24 mm
(8) - Standard PET + 1.2% Aluminum, Eₚ = 0.23 mm
(9) - Standard PET + 1.7% Aluminum, Eₚ = 0.22 mm
(10) - Standard PET + 2.0% Aluminum, Eₚ = 0.23 mm

Figure -3- shows a graph of the robustness and stability of the shield given by containers with different concentrations of Al, throughout the whole of the UVA and VIS spectrum.

The references used in the graph correspond to:
(11) - Commercial 1: 8% Filler (Titanium dioxide + Iron oxide), Eₚ = 0.26 mm
(12) - Commercial 2: 9% Filler (Titanium dioxide + Iron oxide), Eₚ = 0.26 mm
(13) - Commercial 3: 28% Filler (Titanium dioxide + Silica), Eₚ = 0.31 mm
(14) - Standard PET + 1.0% Aluminum, Eₚ = 0.23 mm
(15) - Standard PET + 1.2% Aluminum, Eₚ = 0.23 mm
(16) - Standard PET + 1.7% Aluminum, Eₚ = 0.23 mm
(17) - Standard PET + 2.0% Aluminum, Eₚ = 0.23 mm

Figure -4- shows a graph of the relationship between the F factor value and the % TR corresponding to each F value, in a range of F values (F = Ep x Al%) which go from those corresponding to the combination of low wall thicknesses (less than 0.2 mm) with low Al concentrations (0.5%) to those that correspond to high wall thicknesses (over 0.4 mm) with Al contents of up to 2%.

To obtain the graph, the % TR of containers of very different types obtained by different combinations of Ep and Al%, for Ep from 0.12 mm to 0.50 mm and Al% from 0.5% to 2%, has been tested. The chosen wavelength to evaluate the % TR was 550 nm, for the following reasons: firstly, it is important to point out that, since it has already been demonstrated that % TR remain constant at any wavelength in the VIS spectrum, the curve will have the same shape and composition at any wavelength between 400 nm and 700 nm. However, the reason for choosing 550 nm is because this is an area of the spectrum that is conventionally selected due to the sensitivity shown by B2 vitamin and milk and dairy products, in general, in this area. Furthermore 550 nm coincides with the central part of the VIS spectrum making it, in any case, an area that is conventionally representative of the spectrum.

The graph shows the extraordinary level of concordance between % TR and F, given both by the level of statistical fit of the data, reflected in the figure as R2 = 0.9824, and by the precise fit of the data (represented by figure points) to the curve that defines the pattern of the relationship between F and % TR. It is thus concluded that there is a high degree of relationship between the F values and the corresponding % TR.

Figure -5- shows a graph representing the % TR across the VIS spectrum that is afforded by the wall of a container with a wall thickness of 0.23 mm (Ep = 0.23) with Al as the only shielding filler and Al% of between 0.7% and 2.0%. Once again the graph shows the constancy of the shield afforded by each Al%, across the entire spectrum depicted.

The references used in the graph correspond to:
(18) - Standard PET + 0.7% Aluminum, Eₚ = 0.23 mm
(19) - Standard PET + 1.0% Aluminum, Eₚ = 0.23 mm
(20) - Standard PET + 1.2% Aluminum, Eₚ = 0.23 mm
(21) - Standard PET + 1.7% Aluminum, Eₚ = 0.23 mm
(22) - Standard PET + 2.0% Aluminum, Eₚ = 0.23 mm

Figure -6- shows a graph of the influence on the % TR of the VIS when small amounts (between 0.0042% and 0.0126%) of a light absorber (in this case C black) are added at a given concentration of Al (1.2% in this case). It can be seen that the influence is barely noticeable for 0.0042% of added C; that the reduction in transmittance (increase in shield) is notable for C additions of 0.0084% and that with higher amounts of added C (0.0126%), no significant improvements in the shielding level are noted.

The references used in the graph correspond to:
(23) - Standard PET + 1.2% Aluminum, Eₚ = 0.23 mm
(24) - Standard PET + 1.2% Aluminum + 42 ppm Black, Eₚ = 0.23 mm
(25) - Standard PET + 1.2% Aluminum + 84 ppm Black + 0.25% TiO₂, Eₚ = 0.23 mm
(26) - Standard PET + 1.2% Aluminum + 126 ppm Black + 0.50% TiO₂ , Eₚ = 0.23 mm

Figure -7- shows a graph, with the same type of representation of % TR in the VIS, depicting the influence of adding TiO2 (for 0.25% and 0.5% addition of TiO2) to a basic composition formed by 1.2% Al + 0.0084% of C. As can be seen, the addition of TiO2 in the amounts indicated causes a positive effect on the reduction of the % TR (improvement in shielding), which does not reveal significant differences between 0.25% and 0.5% addition of TiO2.

The references used in the graph correspond to:
(27) - Standard PET + 1.2% Aluminum + 84 ppm Black, Eₚ = 0.23 mm
(28) - Standard PET + 1.2% Aluminum + 84 ppm Black + 0.25% TiO₂, Eₚ = 0.23 mm
(29) - Standard PET + 1.2% Aluminum + 84 ppm Black + 0.50% TiO₂, Eₚ = 0.23 mm

Figure -8- is of a graph which shows, across the VIS spectrum, the % TR rendered by a composition with a total filler of 1.45%, containing 0.25% TiO₂, compared to another very close composition of total filler (1.5%) without TiO2. It can be observed that, although adding TiO2 is shown to be effective in improving shielding, said shield level can be achieved or even improved by replacing 0.25% TiO2 with an increased concentration of Al, in an amount equivalent to 0.25%.

The references used in the graph correspond to:
(30) - Standard PET + 1.5% Aluminum + 84 ppm Black, Eₚ = 0.22 mm
(31) - Standard PET + 1.2% Aluminum + 84 ppm Black + 0.25% TiO₂, Eₚ = 0.22 mm

### Preferred embodiment of the invention

The opaque, single-layer container produced by the method that is the subject-matter of the invention is intended to contain photosensitive substances, and comprises a thermoplastic matrix and opacifying material dispersed in the thermoplastic matrix. The thermoplastic matrix is PET, PE, PP, PLA, PEN, PA or a mix of some of these, whilst the opacifying material comprises between 0.5% and 2.0% of Al, by weight, in relation to the total weight of the container, in such a way that the F coefficient, obtained by multiplying the % of Al by the average thickness of the wall of the container in mm., is included between 0.06 and 1.00 (0.06 < F < 1.00), preferably between 0.2 and 0.5, and, in a more specific embodiment, is 0.35, with a tolerance of +/- 0.05.

The container is produced by injection, injection-blowing, extrusion-blowing or compression-blowing.

In an alternative embodiment, the opacifying material may contain a light absorber, which may be, for example, C black, iron oxide, or any other product or combination of similar properties, in terms of its capacity to absorb light radiation, in a percentage of between 0.0003% and 0.05% of absorber, by weight, in relation to the total weight of the container, and preferably between 0.006 and 0.015%.

This preferred embodiment of the container produced by the method of the invention is obtained as a result of the following development and experimental tests: the invention that is described refers to a method for producing an opaque plastic container that incorporates aluminium as the main shielding filler, intended to contain any substance that is sensitive to deterioration due to photo-induced reactions: milk and milk products, foods enriched with vitamins or amino acids, fruit preparations or any product in which light can alter its appearance, organoleptic properties or nutritional value, and in general, a light-shielding solution has been sought that is universalizable from various points of view:
Firstly, the resilience of the shield must be sufficiently high to be effective in preserving the most sensitive substances, without having to use complex solutions or amounts of fillers that hinder application and make the solutions too expensive.
Secondly, given that each substance may have a specific sensitivity in different regions of the UV-VIS spectrum, the protection provided must be very uniform at any wavelength included between those mentioned (especially from 400 to 700 nm). This is important because it is common for each product to respond to several regions of sensitivity and it can be a cumbersome and expensive task to determine these wavelength regions.

That the materials are processable in conventional equipment used for the production of containers and that the processes involved are not adversely affected in terms of performance. This aspect is essential in facilitating the implementation of the invention, without any need for additional investments in container producing equipment and without an increase in the cost of the processes.

And that the incorporation of the fillers can be carried out in a modular fashion in so far as their content, so that the possibility of predicting fundamental parameters of the container, as already explained in this description, can be carried out with exactness and precision. The possibility of adding Al to the plastic matrix in different ways (from polymerization to master batches in different carriers and media) enables the desired flexibility without any notable complications.

The latter is particularly useful for evaluating the viability of projects, quickly and simply, once functional and economic objectives have been defined.

For this purpose the following requirements for the filler/s have been sought:
- That the total shielding filler content is as low as possible to attain a given coverage, and in all cases, notably lower than the contents proposed by the solutions that are now regularly found on the market to obtain similar shielding. This aspect is fundamental since the greater the filler content the more difficulties there are in production processes. The filler % and levels of shielding provided by different commercial solutions have been compared with the invention.
- That the filler or fillers incorporated are those commonly used and that there are no particular problems of with their commercial availability.
- That they do not notably increase the density of the end material so that the weights of the containers are not penalized because of this aspect. The commercial solutions available to date increase the weight of the container appreciably, in comparison with standard PET, due to their greater density, whilst the solution proposed in this description produces weights that are practically the same as those of standard PET.
- That they are not abrasive, so as to avoid or minimize wear on equipment and facilities involved in the production of containers. Some abrasion and premature wear of blowing moulds, of mobile parts of injection moulds and cutting blades in the pelleting process have been reported when TiO₂ is used as the shielding agent, which is, at the current time, the most commonly used material for this purpose.
- That it is economically viable and, in any case, cheaper than most of the current market solutions with equivalent features. This is possible thanks to the low amounts of fillers required by the invention that is described and to the simplicity of its composition.
- That it is suitable for food contact and does not have a tendency to migrate.
- That the appearance is conventionally attractive and easily personalizable, either by incorporating dyes or by covering the container with sleeves, using conventional techniques. Given that most of the shield provided by the Al is produced by the reflection of incident light, the possibility of personalization is much simpler and cheaper than in those cases in which the effect of the diffraction or absorption of light alters the effects of the dyes or sleeves.

The experiments that have enabled conclusions to be reached concerning the shielding capacity of Al have been performed using PET as the base thermoplastic material and the incorporation of shielding fillers has been performed using pilot polymerization, extrusion, injection and blowing facilities, with the use of both liquid and solid media in the batching process. These pilot facilities faithfully reproduce industrial processes and hence the conclusions drawn from them can be totally extrapolated to conventional commercial production facilities.

Having established the theoretical shielding capacity of aluminium, having evaluated its availability and price and identified the supply quality required for any type of subsequent application (including food applications), the experiments have involved quantifying the characteristics required in the containers in order to reach different shielding levels, between 90% protection (10% transmittance) and 99.99% protection (0.01% transmittance). To avoid other influencing factors that are really less important but potentially capable of distorting the conclusions obtained, such as: stretch ratios, degree of crystallinity in the plastic and surface finishes, amongst others, work has always been carried out with the same tools for injection, blowing and dispersion of the Al in the plastic matrix (PET).

Having defined the type of opacifying material and, consequently, the specificity of the shielding power and shielding characteristics provided, there are two factors that influence the light-protecting capacity of the container: the concentration of shielding material incorporated in the polymeric matrix, as can be seen in Table 3 and the thickness of the container wall, as shown in Table 4.

**Table 3: Influence of Filler on Transmittance**

| **Filler (%)** | **Transmittance (%)** |
|---|---|
| 0.5 | 4.79 |
| 0.7 | 2.76 |
| 1.2 | 0.11 |
| 1.5 | 0.01 |
| 2.0 | 0.01 |

**Table 4: Influence of Thickness on Transmittance**

| **Thickness (mm)** | **Transmittance (%)** |
|---|---|
| 0.125 | 2.41 |
| 0.150 | 0.12 |
| 0.185 | 0.09 |
| 0.190 | 0.07 |
| 0.200 | 0.01 |
| 0.225 | 0.01 |
| 0.235 | 0.01 |

| | |
|---|---|
| *Transmittance values recorded for 1.5% fillers at 550 nm* | |

Hence, work has been carried out to evaluate the shields involving the two factors indicated (% of fillers and thickness of container wall), in a range of shielding levels which has been considered to be sufficiently broad to cover applications ranging from those in which, either due to the low sensitivity of the substances to be protected or due to the short lifetimes requested, the shielding required does not need to be close to total shielding (e.g. for milks that have a shelf life of between 2 and 3 weeks, it is sufficient to cover around 90% of radiations), up to virtually absolute coverage (around 99.99%) which may be required for sensitive milks (UHT and similar) with a shelf life of more than six months.

Having chosen Al as the main shielding filler the following parameters and aspects have been worked on, in the following ranges of magnitude:
- Fillers: Al between 0.5% and 2%; C black between 0.0042% and 0.0126%; TiO₂ between 0.1% and 0.5%.
- Container wall thicknesses: in addition to those that are usual in plastic containers (between 0.2 mm and 0.3 mm), much lower thicknesses have been worked with, corresponding to extremely light containers (up to 0.12 mm) and much higher ones (up to 0.5 mm), because practicable ranges are considered even though they are not usual.

To carry out the experimentation, preparations were made in which the Al was dispersed and suspended in different carriers compatible with the processes of adding the filler in the different processes already described, which allow the incorporation of fillers to the polymeric matrixes. Carrying was successfully tested in both solid media (concentrates or master batches) and liquid media (liquid concentrates) as well as in MEG (monoethylene glycol) which is one of the raw materials of PET and that which will enable its addition in polymerization reactors, if this were to be the chosen means for dispersing the filler in plastic.

The list of fillers indicated in the experimental data described hereafter, have been obtained using always the same type of solid PET-based preparation.

Following this, preforms of identical shape and weight, with different Al contents as the sole shielding filler were injected; these preforms were blown to obtain containers that were identical one to another and representative of any commercial version, in this case with a container wall thickness of 0.23 mm; finally the containers were tested to evaluate the shielding attributes provided by the different concentrations of fillers, The results of this experiment can be seen in figure -5-.

The conclusions drawn from this part of the experimentation are as follows:

For a given wall thickness there is a threshold concentration of A! in the plastic matrix, above which the shielding level is magnified, probably due to the effect that a sufficient coverage of the surface exposed to light produces when it reflects the radiation with greater efficacy. For the container that is the subject-matter of the experiment (Ep = 0.23 mm) this concentration is between 0.7% and 1%, % Al by weight in relation to total weight of the composition.

With a concentration of Al in the plastic matrix of more than 1.7%, the effects of greater concentrations can be considered to be quantitatively negligible for the wall thicknesses evaluated (0.23 mm), since the shield at these concentrations is virtually total (considering "virtually total" as the point at which the available measuring equipment in the current state of the art, is not capable of discerning consistent differences for different concentrations, which is determined by the detecting sensitivity of the available measuring equipment in the current state of the art, which is, as previously indicated, +/- 0.01% TR).

Having established the possibility of using very low doses of Al to achieve the shield targets sought, work was carried out on evaluating the synergic effects that the addition of low concentrations of other shielding agents already known and profusely described in the state of the art could possibly provide in the interest of an even greater reduction in filler contents.

The tests began with a fixed concentration of Al, which was 1.2% by weight of Al, to which increasing amounts of C black were added.

The results of the improvements in shielding achieved can be seen in figure -6-, from which the following conclusions were drawn:

There is a significant contribution in relative terms to the shield by the effect of adding C black in the whole spectrum range tested.

Concentrations of C added to 1.2% of Al have little or no influence on the shielding effect under 42 ppm of C.

Contribution to the shield of 84 ppm of C added to 1.2% Al has a significant effect (50% improvement in relative terms) on the shield, but improvements do not result from higher additions.

As a surprising effect, we can mention that addition of C black to Al in the amounts described caused an increase in the L* colour measured in the container walls (a coordinate that indicates the "white" value, which is whiter the greater the L* value is) by up to 6-7 units with the consequent improvement in appearance. This effect can be seen in Table 5.

**Table 5: Influence of addition of black in colour**

| **Material Composition** | **Colour L*** |
|---|---|
| PET + 1.2% Aluminum | 74.9 |
| PET + 1.2% Aluminum + 84 ppm Black | 81.2 |

Having established a composition of 1.2% Al + 0.0084% of C as the reference, different amounts of TiO₂ whose shielding capacity is known, were added. The effects of combining Al, C and TiO₂ are shown in figure -7-, from which the following conclusions were drawn.

Additions of 0.25% and 0.5% of TiO₂ to the combination of Al and C, have a positive effect on the shielding level and for this reason it is important to highlight this fact.

However, it is also true that given the high level of shielding achieved by the Al + C, quantitatively the effect of TiO₂ will only be relevant in highly specific cases. Furthermore, the shield rendered by the combination of : 1.2% Al + 0.25% TiO₂ +0.084% C (total filler 1.458%), can be obtained by eliminating the TiO₂, maintaining 0.0084% of C and increasing the Al content to 1.5% (total filler 1.508), which represents practically the same total filler as with 0.25% of Al but with a simpler and more attractive composition, as shown in figure -8-. This, together with the fact that the addition of TiO₂ alters the appearance of the container as it inhibits the attractive metallic shine of the Al, to a slight degree at the 0.25% dose and notably at 0.5%, recommends not prescribing the presence of TiO₂ generically and merely registering the possibility of using it in specific cases.

Another part of the experimentation consisted of fixing the Al content in preforms with the same weight and varying the blowing moulds, which determine the final capacity of the container, to obtain walls of different thicknesses. The thicknesses tested range from those that commercial containers of different types and weights may reasonably have, from very light containers (up to 0.12 mm) to heavy containers of great mechanical consistency (0.5 mm). Containers with average wall thicknesses of less than 0.12 mm are too weak to maintain their consistency in most applications, and wall thicknesses above 0.5 mm would be too heavy, expensive and difficult to process.

By way of an example: most commercial plastic containers are in the 0.2 mm and 0.3 mm thickness range.

The selection of the thicknesses tested satisfied the following criteria: to define the lower threshold, criteria of container feasibility and mechanical consistency; and to define the upper threshold, criteria of economy and rationality of the processes involved.

Definition of lower threshold: work was begun by measuring thicknesses of commercial bottles in different applications, sizes and materials, as shown in Table 6.

**Table 6: Thicknesses of various container**

| | **Container Material** | **Contents** | **Formation process** | **Average thickness (mm)** |
|---|---|---|---|---|
| **1** | PET Bottle | Milk | Injection-Blowing | 0.19 |
| **2** | PET Bottle | Milk | Injection-Blowing | 0.23 |
| **3** | PET Bottle | Milk | Injection-Blowing | 0.21 |
| **4** | PET Bottle | Milk | Injection-Blowing | 0.24 |
| **5** | PET Bottle | Milk | Injection-Blowing | 0.20 |
| **6** | PE Bottle | Milk | Extrusion-Blowing | 0.50 |
| **7** | PE Bottle | Milk | Extrusion-Blowing | 0.45 |
| **8** | PET Bottle | Juices | Injection-Blowing | 0.36 |
| **9** | PET Bottle | Cold tea | Injection-Blowing | 0.27 |
| **10** | PET Bottle | Flavoured water | Injection-Blowing | 0.23 |

It is important to highlight that the tables are compiled with the PET thermoplastic matrix but the results obtained enable extrapolation and it can be affirmed that the alternative thermoplastic matrixes will provide similar results.

The desire to obtain lighter containers is a common goal in all of the sectors involved in the marketing of packaged products and in this case the technical limit attainable by usual container production processes has been estimated.

Given that containers produced by injection-blowing or by blowing of preforms are the most frequent ones and those that systematically have the lowest wall thicknesses, we will concentrate on these to justify the potentially viable lower limit.

The formation of preforms involves filling a mould with plastic material in such a way that the processes are quick and reliable from the point of view of quality. Given that the mould that receives the material that will form the piece is refrigerated at temperatures (between 7° C and 15° C) that are much lower than the moulding temperatures (up to 300° C), the filling operation must be quick to prevent the material from solidifying before the mould has been completely filled. The dimensions of the preforms play an essential role in mould filling and, in general, there is a relation between the length of the piece (Lp) and its wall thickness (Wt) which must be unavoidably heeded. It is not usually possible to form pieces in which the L/Wt ratio exceeds a certain value, which in general terms, is around 40 for PET, which, furthermore is the material used for practically all of the containers produced by injection-blowing or blowing of preforms. For the most extreme cases of very short and very light preforms (E.g. Lp= 80 mm), conventionally the wall thickness for this type of short, light preforms is around 2 mm; being aggressive and considering possible contributions made by special materials or specifically adapted equipment, we calculate that the minimum viable preform thickness is 1.8 mm.

When the preform is blown it undergoes mechanical stretching, filling the blowing mould and forming the container in its final dimensions. During stretching orientation of the material occurs which, in simple terms, can be calculated by dividing the longitudinal length of the bottle (Lb) by that of the preform (Lp), giving the longitudinal stretching (Sl) = Lb/Lp. The same occurs in the radial direction, so that if the average diameter of the container (Db) is divided by the average diameter of the preform (Dp), the radial stretching value (Sr) = Db / Dp is obtained.

The (Sl) x (Sr) product gives the biaxial stretching value (St). This value must be centred within certain limits in order, on the one hand, to be able to cater for the appropriate distribution of the material in the container and, on the other, the stretching limits that the materials withstand without suffering alterations in their molecular and crystalline structure (in the case of semi-crystalline polymers). These values fall within the outermost limits of 8 and 15. Values below 8 make it difficult to obtain a good distribution of the material and values over 15 lead to very aggressive processes and few semi-crystalline polymers can withstand them.

If we consider the extreme case of a preform with a very thin wall (1.8 mm) and very high stretching (15), the average theoretical thickness of the resulting container (Wb) will have a value that is given by the ratio between the thickness of the preform and the biaxial stretching (Wb = Wp / St), which, in the borderline case defined by the criteria described will be: Wb (bottom limit) = 1.8 mm / 15 = 0.12 mm.

Upper threshold: in this case the basic imposition is really the weight of the container which, for cost-saving reasons tends to be voluntarily restrained, however, certain technical arguments can also be added and are now explained.

The limits for viable preform wall thicknesses are influenced by both the materials used and by the equipment used to produce the preforms, however it is, in general, the cooling times and thus the production cycle (the greater the thickness, the greater it is) and the need for stretching during blowing (the greater the thickness the more difficult blowing is), that determine a thickness of around 4 mm for preforms that are reasonably viable for processes, materials and standard equipment.

Considering the extreme case of low stretching and high thickness of preform wall, in the borderline cases defined, the coefficient Wp/St will establish the value of the upper limit of thickness in conventionally obtained containers. Wb (upper limit) = 4 mm / 8, which gives a reasonable maximum container wall thickness of around 0.5 mm.

These are then the reasons for selecting an approximate range of wall thicknesses, for the containers tested, of between 0.12 mm and 0.5 mm.

It is important to stress that most commercial containers have wall thicknesses of between 0.2 and 0.3 mm which is the range in which most of the tests and measurements have been performed, to carry out the present invention.

We now examine the criterion for the selection of the range of concentrations of the chosen Al.

Given that, with the combination of container wall thicknesses and the concentration of opacifying (shielding) filler incorporated, the aim is to achieve a certain level of shielding (in our case measured by % transmittance), it is the selection of shield levels that will determine the objectives in the concentrations of fillers (expressed as filler% by weight in relation to the total container weight).

It is thus important to begin by establishing the shield criterion that is being sought. As already mentioned, 90% of coverage (10% of transmittance) is considered to be a sufficient lower threshold to offer functional service for those cases in which, due to the low sensitivity of the product or due to the fact that only a short lifetime is required (less than three weeks), it is not necessary to provide total protection but it is necessary to protect from most light radiations.

In those cases in which the products are highly sensitive or the lifetimes required are long (over four months), or both of these factors are combined (micro-filtered milk, UHT, group A and B vitamins, peroxides...), protection must be virtually total and the protection requirement is considered to be 99.99% (0.01% transmittance). It is fair to say that for transmittance measurements that are almost nil, expressed as under 0.02%, the sensitivity of the measuring equipment is practically transcended (+/- 0.01%), so that any result around this magnitude can be considered as total shielding.

Having calculated, in this manner, levels of transmittance of between 10% and 0% (or 0.01% taking into account the sensitivity of the measuring equipment), the combination of wall thicknesses (between 0.12 mm and 0.5 mm) with different filler concentrations, will determine its upper and lower thresholds. The upper threshold will be defined in the point at which, from this point onwards, the contribution of a greater content does not improve the shield for a determined wall thickness amongst those cited.

It has been established that for containers with a standard wall thickness (between 0.2 mm and 0.3 mm), additions of Al of above 2% do not contribute with an improvement in shielding levels given that they are already, in the combination Ep = 0.2 mm X Al% = 2% (F = 0.4), practically total. It can also be deduced, from observing figures -2- and -5-, that in the case of a wall thickness in the low range of the standard thicknesses (around 0.2 mm), a concentration of added Al of 0.5% will be sufficient to cover the lower range of shielding required (% TR around 10%).

Hence, for these reasons, the preferred range of Al concentrations is defined as being between 0.5% and 2%.

The shield (% TR) is the parameter that is defined by the functionality required in each case, hence the objective to be fulfilled is to guarantee that a container has the maximum % TR value that has been defined for it.

The following step, given that the basic factors that affect the shield are the thickness of the container wall and the concentration of opacifying filler it contains (Ep and Al%) has consisted of finding a factor that relates both parameters (wall thickness and Al concentration), in a simple manner, so that, based on it we can find the theoretical specificity that will orient the formation of the container for a previous defined shield. Given that the container wall thickness is normally known in advance or can be calculated from elemental premises such as the required capacity and weight, relating the shield to the factor that groups together thickness and concentration, will reveal the minimum concentration of filler needed to guarantee the required shield in each case, which is the equivalent to being able to calculate costs, evaluate performances and, in short, carry out a pre-assessment of the viability of the projects in which shielding is required, without the need for prototypes and empirical tests which are always costly in time and resources.

This factor (F) was defined, in a simple manner, as the product resulting from multiplying the wall thickness (Ep), in mm, by the percentage of Al contained by the container. F = Ep x (% AI), % Al being = ((weight of Al in the container in question) / (total weight of container)) x 100.

In order to establish if the "F" factor, defined as: F = Ep x %Al, is really a characterizing parameter of the container in terms of the light shield contributed to it, numerous experiments have been carried out, consisting of composing different F values by means of different combinations of wall thicknesses and Al concentrations within those ranges already defined for Ep (between 0.12 and 0.5 mm) and % Al (between 0.5% and 2%). In this case only the Al has been tested, without being accompanied by C or different fillers to Al, as it is know that C additions or TiO2 additions would, in any case, improve the performances of Al alone. Of the whole group of containers obtained by means of the different combinations, % TR through the walls was tested choosing 550 nm transmittance as the representative datum of the level of shielding, for the customary reasons previously mentioned. A graph was then plotted to compare the different F values with their corresponding % transmittance. The results of this experiment are shown in figure -4-. As an indicator of the degree of fit of the data, the squared regression coefficient was chosen (statistical processing of data), represented as R2 in the right margin of the graph. R2 is an indicator of the degree of relationship that exists between the opposing parameters on a graph of this type (in our case F versus % TR), indicating, in the extreme and hypothetical cases , R2 = 0, an absolute lack of relationship and R2 = 1, absolute concordance. For empirical experiments in which industrial means and techniques are used, a value of R2 > 0.9 can be considered to be a reliable value of concordance and relationship between the opposing parameters, within the target experiment ranges.

Given that in our case a value of more than 0.98 has been obtained for R2 and taking in account the almost inexistent dispersion of the plotted data in relation to the graph curve, it can be concluded that the F factor and % TR (level of shielding) are closely related and thus, F is considered a characterizing parameter of the container in terms of light shielding.

Observing figure -4- the following statements can be made:
- That there is a relationship between shielding levels and the F factor value, so that the greater the values of F, the lower the % transmittance is.
- That it is possible to find in the F factor, as it has been defined, a range of values that, for any combination of wall thicknesses and concentrations in the ranges previously defined for C (0.5% to 2% Al) and Ep (0.12 mm to 0.5 mm), determines transmittance through the container wall. For maximum transmittances of 10%, this value is calculated to be slightly below 0.1 and for total shielding (0.00% transmittance) the factor must be above 0.40 or 0.50.
- That with low F values (lower than 0.15) the effect that increments of said factor will have on the shield, will have a very notable effect on the contribution of the shield, and that with high F values (above 0.25) the effect on the shield in absolute terms will require significant increases in the factor. Observing this fact is of crucial importance to reach an effective compromise between the level of shielding sought and the constitution of the container required in each case.
- That the use of Al allows us to obtain virtually total shields in single-layer containers, with conventional constitutions and processes. For example: for a container with Ep = 0.22 mm (conventional constitution), it will be sufficient to add less than 2% of Al to achieve a total shield (0% TR), which is perfectly compatible with conventional container-making and additivation processes.
- That the proven relationship between the F factor and the % TR, allows predictions to be carried out and feasibility studies prior to undertaking projects for shielding containers, without the need for lengthy and costly empirical tests.

It follows from the above, that the "F" factor, as it has been defined, is a characterizing parameter of the container that is described and that the assignment of a specific value to said factor will define different constitutions of possible containers to achieve, within a narrow margin of variation, a specific light shielding level at any wavelength between the UVA and VIS spectra (from 200 nm to 700 nm),

In view of the above, and taking into account the Ep and % Al ranges tested, for the reasons already explained, the containers produced by the method that is characteristic of this invention are made within the following limits: from Ep = 0.12 mm and %Al = 0.5%, to Ep = 0.5 mm and Al% = 2%, resulting in F values between 0.06 and 1.0, which is consistent with the F values that had been approximately established to cover from % TR of around 10% (F slightly lower than 1), to total shields (% TR 0 for F values above 0.4 or 0.5).

Consequently, in order to guarantee the performance of the container produced by the method that is the object of this invention, it is deemed appropriate to claim a range of values of the F factor of between 0.06 and 1.0 (0.06< F < 1.0).

It is also possible to advance, with precision, the constitution of a container to meet a shielding need that has been previously defined based on the F factor. Some examples of the practical application of predictive estimation of containers using the relationship between F and % TR are cited below:
Example 1: assuming that for a certain photosensitive product we are aware of the level of protection required (99% at 550nm), the capacity of the container (1 litre) and the weight (30 grams); based on the weight and capacity it is easy to calculate, with considerable precision, by means of disclosed and simple procedures, the thickness of the container wall (0.28 mm in our case); as can be seen in the graph shown in figure -4-99% coverage (1% TR) involves an factor F = 0.2; since F = Ep x % Al, we apply the product to our case: 0.2 = 0.28 x % AL, resulting in %Al = 0.2/0.28 = 0,71%, the container is thus defined and there is the possibility of obtaining an advance evaluation of technical or economic viability without the need for costly and lengthy empirical tests. Furthermore, another important benefit provided by this invention is the constancy of the level of shielding at any wavelength, it is not even necessary to know in advance the specific sensitivity of a substance in order to apply this simple predictive method
Example 2: assuming that total coverage is required for a light container, that the specific sensitivities of the product for packaging are not known and that the economic cost of the container is critical for the viability of the project; with the known procedures it would be very difficult to fulfil the three premises, since with single-layer containers total coverage at all wavelengths would be unviable, multi-layer containers are costly and do not permit extreme lightening (a certain minimum wall thickness is needed to overlay structures) and furthermore they are expensive " per se"; in our case, it will be sufficient to choose a thin but viable wall (0.20 mm), consult the graph in figure -4- for the lowest F value that will ensure a % TR of 0.01% or less (0.4), and apply the formula F = Ep x %Al to discover the amount of Al to define the solution: 0.4 = 0.20 x %Al, and hence: % Al = 2%, thus defining the container in an efficient manner.
   As it has already been demonstrated that small additions of other shielding fillers, such as C and/or TiO₂ to the Al base, improve the performance of the shield, if these fillers were to accompany Al only, we could improve the shielding levels already expressed for a given concentration of Al, or we could decrease the total filler contents to equal a given Al-only shield.
   Next, once the limit values of the F parameter that characterizes the container produced by the method that is the object of this invention have been calculated to be between 0.06 and 1.0 (0.06 < F < 1.00), further examples of applications to practical cases are described.
Example 3: assuming the case of a container with very stringent mechanical requirements (indicated by a high wall thickness), in which the shielding level must be 99.5 % (% TR = 0.5%) at two different wavelengths: 380 nm and 500 nm. We firstly define a wall thickness that guarantees a high mechanical consistency, so that a wall thickness of 0.4 mm is established. We then have to define the %Al that guarantees shielding in the least costly way possible. As, in our case, the level of shielding is practically independent of the wavelength, we can use the graph in figure -4- to estimate an F value = 0.25 to guarantee 99.5% coverage (% TR = 0.5%) with the lowest filler (Al) content possible. Since F = Ep x %Al, if we replace the estimated values and solve %Al in the equation, we obtain an %Al value = 0.25 / 0.4 = 0.625 %, which thus defines the container.
   If the weight of the container is not a previously defined parameter and the shielding level alone conditions the choice of container, several options will be possible with different combinations of Ep and C.
Example 4: assuming that we require a container with a shielding level of 99% (we no longer insist on the need to specify wavelengths because, in our case, this is not relevant due to the consistency of the shield at any wavelength), and for which the options of high or low wall thickness (greater or lesser weight of container) are secondary considerations. Once again we consult figure -5- in which we can see that for a % TR of 1% (99% coverage), the F value is 0.2. Having established F = 0.2, the extreme proposals for containers would be: an extraordinarily light container (0.12 mm Ep) with 1.7% Al (0.2/0.12 = 1.66 %Al), or a very heavy container (0.4 mm of thickness Ep) with 0.5 %Al (0.2 / 0.5 = 0.5 % Al). Between these limits of Ep and %Al the relevant calculations can be carried out to chose the required container in line with cost-saving criteria (comparing PET cost with cost of Al), type of equipment available (greater or lesser amount of filler), type of container required (heavy or light)....

In examples 1 to 4, the aim is to illustrate the importance of being able to carry out reliable predictions, thanks to having defined the F factor as a characterizing parameter of the container produced by the method that is the object of this invention.

To perform experimental tests, in addition to usual analytical techniques employed to characterize plastics (measurements of viscosity, colours, monomer content, grain size, catalyst content, humidity content, characterization of terminal groups in polymer chains, density, melting, softening and crystallization points, as well as the most frequent analyses), other techniques have been used that are aimed specifically at evaluating the light shielding attributes and filler contents of the solution described. The particular techniques employed are the following:
A - Incorporation of light in the containers: an ISO TECH light meter with a measuring range of between 0 and 3,000 Lux has been used.
   The technique consists of exposing containers to constant illumination with an artificial light of an intensity of 2,500 Lux at a distance of 1 m from the illuminating source. The equipment's detector cell is placed inside the container and the mouth is closed with an opaque plug which in turn holds the detector in place.
   The measurement indicated by the equipment, once the scale has been adjusted to the opacity conditions of each container, indicates the total amount of light that penetrates through the walls.
   This test is of no use for measuring specific shielding levels at each wavelength.
B - Continuous spectra UV - VIS: allows the shielding capacity at each wavelength to be known. The resolution used allows discrimination of measurements every 10 nm, between the 200 and 700 nm wavelengths.
   For transmittance measurements, in the UV region a Perkin Elmer spectrophotometer with double UV and VIS illumination has been used, covering possible measurements from 200 nm to 700 nm. For VIS region measurements, a Minolta CM spectrophotometer has been used, which only covers 330 to 700 nm. Both units are equipped with a detector in integrating sphere mode, so that all the radiation emerging from the sample exposed is collected and detected. It is important to distinguish between this type of measurement from that provided by other equipment without an integrating sphere (normal mode), since the latter only collect and detect the light that emerges perpendicularly to the exposed sample and for this reason they may give transmittance readings that are deceptively better than those detected via the mode used in this experiment (integrating sphere mode). The sensitivity of the equipment mentioned is +/- 0.01% of TR.
   The test consists of placing a 3 x 3 cm sheet between the illuminating source and the detector so that the equipment can recognise the % of light that passes through the sample sheet (transmittance) at each wavelength, integrate the results and provide data relating to the % of light that has passed through the sample (% TR) at each wavelength. % TR = ((intensity of incident radiation) / (intensity of emerging light)) x 100.
C - Thicknesses of container walls: it is of great importance to know the thickness of the sheet which has rendered a certain transmittance in order to compare the shielding capacities of different solutions since the thickness of the sheet affect the amount of light transmitted.
   For this purpose a specifically adapted MITUTOYO gauge with a precision of 0.01 mm and measuring range of 0 to 8 mm has been used.
D - Mineral filler content: when the solution is known, the most operative procedure is to perform a total calcination of the sample to evaluate ash content. Once the % residue following calcination is known, it is simple to transform the weight of the ashes in the filler that gave rise to them.
   In the case of complex compositions or unknown samples, digestion of the sample is performed and it is subjected to an ICP (Inductively Coupled Plasma) analysis, which enables the different inorganic components to be quantified.
E - Migration tests: in addition to the standard global migration tests to evaluate plastic materials intended for food contact, a specific procedure has been developed to quantify Al in the different simulants typified for this purpose.

The results obtained show the food grade status of the solution presented.

Expression of results and measuring ranges on graphs and tables of % transmittance (% TR).
- Level of light shielding: the experimental measurements that indicate the shielding measurement have always been carried out as % TR. Given that transmittance indicates the amount of light that the sample subjected to radiation has not been able to conceal or dissipate, the shielding level is expressed as the % of light concealed or dissipated by a sample; thus: shielding level = 100 - (% TR). Example: when we refer to a shielding level of 99.99% we are referring to a sample whose spectrophotometric measurement has rendered a % TR = 0.01%. If we refer to a shielding level of 90%, the sample tested has rendered a % TR = 10%.
- Ranges of wavelengths express in the % TR measurements; measurements in the UVA region are notably more costly and complex than those in the VIS region, so much so that this type of measurements has been outsourced to be performed by an external authorized centre.

## Claims

1. - Method for producing an opaque single-layer container by injection, injection-blowing, extrusion-blowing or compression-blowing intended to contain photosensitive substances, comprising a thermoplastic matrix and opacifying material dispersed in the thermoplastic matrix, wherein
the thermoplastic matrix is polyethylene terephthalate (PET), polyethylene (PE), polypropylene (PP), polylactic acid (PLA), polyethylene naphthalate (PEN), polyamide (PA) or a mix of any of these,
and wherein the opacifying material comprises aluminium metal Al between 0,5% and 2.0% by weight of Al in relation to the total weight of the container,
the method being **characterised by** the following steps:
a) choosing a shield parameter TR having a level of transmission between 10% to 0%;
b) defining the coefficient F being in the range between 0.06 < F < 1.00 by using the curve shown in Figure 4;
c) choosing an average thickness of the container wall in the range between 0,12 mm < Ep < 0,5 mm;
d) calculating the weight % of opacifying material by dividing the coefficient F by the average thickness Ep of the container wall as defined in step c) in mm.

2. - Method for producing an opaque single-layer container according to claim 1
wherein in step b) the coefficient F being defined in the range between 0.2 < F < 0.5.

3. - Method for producing an opaque single-layer container according to claims 1 or 2, wherein in step b) the coefficient F being defined to be 0.35, with a tolerance of +/- 0.05.

4. - Method for producing an opaque single-layer container according to claims 1, 2 or 3, wherein the opacifying material contains a light absorber between 0.0003% and 0.05% by weight of absorber in relation to the total weight of the container.

5. - Method for producing an opaque single-layer container according to any of the preceding claims, wherein the light absorber is between 0.006 and 0.015%.

6. - Method for producing an opaque single-layer container according to any of the preceding claims, wherein the light absorber is C black, lampblack or activated C.

7. - Method for producing an opaque single-layer container according to claims 1 - 5, wherein the light absorber is an iron oxide.

8. - Method for producing an opaque single-layer container according to claims 1 - 5, wherein the light absorber is a combination of C black and an iron oxide.

9. - Method for producing an opaque single-layer container according to any of the preceding claims, wherein the wall thickness of the container is in the range between 0,12 mm < Ep < 0,2 mm.

## Patentansprüche

1. - Verfahren zur Herstellung eines undurchsichtigen, einschichtigen Behälters durch Spritzen, Spritzblasen, Extrusionsblasen oder Druckblasen, welcher dazu bestimmt ist, lichtempfindliche Substanzen zu enthalten,
aufweisend eine thermoplastische Matrix und Trübungsmaterial, welches in der thermoplastischen Matrix verteilt ist, wobei
die thermoplastische Matrix Polyethylenterephthalat (PET), Polyethylen (PE), Polypropylen (PP), Polymilchsäure (PLA), Polyethylennaphthalat (PEN), Polyamid (PA) oder eine beliebige Mischung von diesen ist,
und wobei das Trübungsmaterial Aluminiummetall AL zwischen 0,5 und 2,0 Gewichtsprozent von AL in Bezug auf das Gesamtgewicht des Behälters aufweist,
wobei das Verfahren durch die folgenden Schritte gekennzeichnet ist:
a) Wählen eines Abschirmparameters TR mit einem Transmissionsgrad von 10% bis 0%;
b) Definieren des Koeffizienten F, welcher in dem Bereich zwischen 0,06 < F < 1,00 liegt, indem die in Figur 4 gezeigte Kurve verwendet wird;
c) Wählen einer durchschnittlichen Stärke der Behälterwand im Bereich zwischen 0,12 mm < Ep < 0,5 mm;
d) Berechnen des Gewichtsprozents an Trübungsmaterial, indem der Koeffizient F durch die durchschnittliche Stärke Ep der Behälterwand in mm, wie sie in Schritt c) festgelegt wird, geteilt wird.

2. - Verfahren zum Herstellen eines undurchsichtigen, einschichtigen Behälters nach Anspruch 1, wobei in Schritt b) der Koeffizient F im Bereich zwischen 0,2 < F < 0,5 festgelegt wird.

3. - Verfahren zum Herstellen eines undurchsichtigen, einschichtigen Behälters nach Anspruch 1 oder 2, wobei in Schritt b) der Koeffizient F mit 0,35 mit einer Toleranz von +/- 0,05 festgelegt wird.

4. - Verfahren zum Herstellen eines undurchsichtigen, einschichtigen Behälters nach Anspruch 1, 2 oder 3, wobei das Trübungsmaterial einen Lichtabsorber zwischen 0,0003 und 0,05 Gewichtsprozent von Absorber in Bezug auf das Gesamtgewicht des Behälters enthält.

5. - Verfahren zum Herstellen eines undurchsichtigen, einschichtigen Behälters nach einem der vorhergehenden Ansprüche, wobei der Lichtabsorber zwischen 0,006 und 0,015% liegt.

6. - Verfahren zum Herstellen eines undurchsichtigen, einschichtigen Behälters nach einem der vorhergehenden Ansprüche, wobei der Lichtabsorber Ruß, Lampenruß oder Aktivkohle ist.

7. - Verfahren zum Herstellen eines undurchsichtigen, einschichtigen Behälters nach Ansprüchen 1 - 5, wobei der Lichtabsorber ein Eisenoxid ist.

8. - Verfahren zum Herstellen eines undurchsichtigen, einschichtigen Behälters nach Ansprüchen 1 - 5, wobei der Lichtabsorber eine Kombination von Ruß und einem Eisenoxid ist.

9. - Verfahren zum Herstellen eines undurchsichtigen, einschichtigen Behälters nach einem der vorhergehenden Ansprüche, wobei die Wandstärke des Behälters im Bereich zwischen 0,12 mm < Ep < 0,2 mm liegt.

## Revendications

1. Un procédé pour la fabrication par injection, injection-soufflage ou compression-soufflage d'un contenant opaque monocouche destiné à contenir des substances photosensibles,
comprenant une matrice thermoplastique et un matériau opacifiant dispersé dans la matrice thermoplastique, étant précisé que
la matrice thermoplastique est en polyéthylène téréphtalate (PET), polyéthylène (PE), polypropylène (PP), acide polylactique (PLA), polyéthylène naphtalate (PEN), polyamide (PA) ou un mélange des matériaux cités ci-dessus,
et étant précisé que le matériau opacifiant comprend du métal d'aluminium Al entre 0,5% et 2,0% en poids d'Al par rapport au poids total du contenant,
le procédé étant **caractérisé par** les étapes suivantes consistant à :
a) choisir un paramètre de blindage TR présentant un niveau de transmission compris entre 10% et 0% ;
b) définir le coefficient F compris dans la fourchette entre 0,06 < F < 1,00 en utilisant la courbe présentée dans la Figure 4 ;
c) choisir une épaisseur moyenne de la paroi du contenant dans la fourchette entre 0,12 mm < Ep < 0,5 mm ;
d) calculer le poids en % du matériau opacifiant en divisant le coefficient F par l'épaisseur moyenne Ep de la paroi du contenant telle que définie à l'étape c) en mm.

2. Procédé pour la fabrication d'un contenant opaque monocouche selon la Revendication 1 étant précisé que le coefficient F défini à l'étape b) est compris entre 0,2 < F < 0,5.

3. Procédé pour la fabrication d'un contenant opaque monocouche selon la Revendication 1 ou 2 étant précisé que le coefficient F défini à l'étape b) est de 0,35, avec une tolérance de +/- 0,05.

4. Procédé pour la fabrication d'un contenant opaque monocouche selon la Revendication 1, 2 ou 3 étant précisé que le matériau opacifiant contient un absorbeur de lumière entre 0,0003% et 0,05% en poids d'absorbeur par rapport au poids total du contenant.

5. Procédé pour la fabrication d'un contenant opaque monocouche selon l'une quelconque des Revendications précédentes étant précisé que l'absorbeur de lumière est entre 0,006% et 0,015%.

6. Procédé pour la fabrication d'un contenant opaque monocouche selon l'une quelconque des Revendications précédentes étant précisé que l'absorbeur de lumière est du noir de carbone, du noir de fumée ou du carbone activé.

7. Procédé pour la fabrication d'un contenant opaque monocouche selon les Revendications 1-5 étant précisé que l'absorbeur de lumière est un oxyde de fer.

8. Procédé pour la fabrication d'un contenant opaque monocouche selon les Revendications 1-5 étant précisé que l'absorbeur de lumière est une combinaison de noir de carbone et un oxyde de fer.

9. Procédé pour la fabrication d'un contenant opaque monocouche selon l'une quelconque des Revendications précédentes étant précisé que l'épaisseur de la paroi du contenant est comprise entre 0,12 mm < Ep < 0,2 mm.
